# EUROPEAN PATENT SPECIFICATION

(11) **EP 4 100 267 B1**
(45) Date of publication and mention of the grant of the patent: **12.11.2025**
(21) Application number: 21701825.8
(22) Date of filing: 02.02.2021
(51) Int. Cl.: B60G 7/00, B60G 7/02, B60G 9/00, B60G 11/27, B60G 11/46, F16F 1/30

(54) **VEHICLE TRAILING ARM ASSEMBLY HAVING AN ASSEMBLED EYELET**
FAHRZEUGLÄNGSLENKERANORDNUNG, DIE EINE MONTIERTE ÖSE AUFWEIST
ENSEMBLE BRAS LONGITUDINAL DE VÉHICULE AYANT UN OEILLET ASSEMBLÉ

(30) Priority: 03.02.2020 NL 2024818; 21.12.2020 NL 2027187
(43) Date of publication of application: 14.12.2022
(73) Proprietor: VDL Weweler B.V., 7325 WC Apeldoorn (NL)
(72) Inventor: SCHRIER, Tom, 7323 RL APELDOORN (NL); EVERTS, Geert, 7721 KJ DALFSEN (NL)
(74) Representative: EP&C
(86) International application number: PCT/EP2021/052352
(87) International publication number: WO 2021/156219

(56) References cited:
- EP-A1- 1 140 529
- EP-A2- 1 138 432
- WO-A1-2009/014423
- WO-A1-2009/014423
- WO-A1-2011/119020
- US-A- 3 802 718
- US-A- 4 995 636
- US-A- 5 150 918
- US-A- 5 150 918
- US-A- 5 375 871
- US-A- 5 375 871
- US-A- 5 465 997
- US-A1- 2007 176 385
- US-B2- 7 077 413

## Description

The present invention relates to a trailing arm assembly for a wheel axle suspension, for example for a truck a trailer or semi-trailer. In particular the invention relates to a trailing arm assembly wherein the trailing arm is formed from a suitable metal by a forming process, such as forging, rolling or casting.

In this type of wheel axle suspensions the trailing arm itself provides the compliancy to cope with dynamic loads, e.g. due to roll movements of the vehicle. These so-called flexible trailing arms are solid and made in one piece from a resilient material, in particular spring steel or in some cases a special grade of cast iron. These trailing arms are made by means of a forming process, in particular a pressure forming process such as rolling or forging, or by a casting process. By the forming process, a dedicated arm portion of the trailing arm is provided with a certain flexural behaviour such that it acts similar to a leaf spring.

The known trailing arms of this flexible type, having a front end portion with an integrally formed pivot eye, are widely spread in the field of air sprung wheel axle suspensions for trailers, semi-trailers and trucks. Many of the known trailing arms are made of spring steel by a rolling process to give the trailing arm at least a thickness taper. Examples of such trailing arms are disclosed in EP 1138432 A2. The front end of the rolled trailing arm is bent into a pivot eye in which a bearing bush is inserted.

Such a bent pivot eye must have a sufficient thickness and width to prevent that the pivot eye is bent open by forces, which occur in the pivot eye during normal operation. This increases the amount of material and consequently weight of the trailing arm.

WO 2009/014423 A1 discloses forged trailing arms according to the preamble of claim 1, and a trailing arm assembly according to the preamble of claim 11, having a closed pivot eye made by forging. Such a closed pivot eye is not prone to opening up again, but it has the disadvantage that the eye is punched after which the front end portion with the pivot eye is twisted as is indicated in Figures 11a and 11b of this publication. Twisting the front end portion of the trailing arm may be avoided by punching the eye in the front end portion in a second step, but this requires a second forming (e.g. forging) apparatus.

An object of the present invention is to provide an alternative trailing arm structure.

This object is achieved by a trailing arm for a wheel axle suspension, the trailing arm having a front end portion including a first eye part integrally formed with the remainder of the trailing arm by a metal forming process, and an attachment portion, located at a distance from the front end portion, configured to attach an axle body to the trailing arm, a rear end portion configured to attach the trailing arm to an air spring, and a spring portion extending between the front end portion and the attachment portion; wherein the first eye has a recess with a, at least partial, cylindrical segment shape, such that, in the trailing arm assembly the recess can be positioned opposite a second separately formed eye part having a recess with a, at least partial cylindrical segment shape, to define a pivot eye to pivotally attach the trailing arm to a vehicle chassis, and wherein the first eye part has at least one flange with at least one mounting hole for a bolt, for tightening the first eye part and second eye part together, to extend through.

The trailing arm including the first eye part can be made conveniently by one forming process, preferably in one step. The trailing arm according to the invention can conveniently be made by a forging process. The trailing arm thus does not have to be moved and handled to another machine to punch an eye at the front end. The second eye part may conveniently be made by one forming process, preferably in one step, e.g. by forging or casting.

In use, the trailing arm is assembled with a bearing bush, in the technical field often referred to as a "silent block". A bearing bush comprises in general a metal cylindrical bush and a rubber outer lining surrounding the metal bush. When the trailing arm is mounted to a bearing bracket attached to the vehicle chassis, the metal bush is rigidly clamped between side plates of the bearing bracket by means of a pivot bolt and a corresponding nut. The rubber outer lining cushions the relative movement between the pivot eye of the trailing arm and the metal bush in axial, radial and rotational direction. The pivot eye of the trailing arm is able to pivot around the fixed metal bush, wherein the rubber lining allows this rotation, but also provides a counterforce due to its elastic deformation by the rotation.

The trailing arm assembly according to the invention advantageously allows two ways to provide the bearing bush in the pivot eye. In one method, the bearing bush is arranged in one of the first and second eye part, after which the bearing bush is clamped between the eye parts by tightening the associated bolts. The rubber of the bearing bush is given a pretension by tightening the first and second eye part together. In another method the first and second eye part are tightened together after which the bearing bush is forced into the eye in the axial direction in a conventional manner by a dedicated pressing device known in the art, as is for example described in EP 1914441. Tightening the bearing bush between the eye parts according to the first mentioned method has the advantage that a dedicated pressing device is not needed.

From US 5150918 and US 5375871 a wheel axle suspension is known including a trailing arm welded together from steel plates or profiles. The result is a rigid, hollow trailing arm, in the field in the German language often referred to as "Kastenlenker". This type of trailing arms is fundamentally different from the type of trailing arm to which the present invention relates, because the rubber bushing provides the compliancy in a suspension system having a rigid hollow welded trailing arm. This is contrary to the suspension according to the invention, in which the compliancy is provided by the deformation of the trailing arm itself. The compliancy is required to resist dynamic loads, in particular loads due to rolling movements of the vehicle during normal operation of the vehicle. To be able to provide sufficient compliancy the rubber bushing in a rigid system like the one in US 5150918 or US 5375871 has a relatively large diameter. These known trailing arms have a semi cylindrical eye part welded to the remainder of the trailing arm and a separate semi cylindrical eye part to facilitate the mounting of the large rubber bushing in the eye.

According to the invention, the first eye part and the second eye part each have at least one flange with at least one mounting hole, said flanges, in the assembled state, being positioned opposite each other and tightened together by a bolt extending through the mounting holes.

In another possible embodiment of the trailing arm assembly according to the invention, the first eye part has at least a mounting hole on either side of the recess, and wherein the first eye part and second eye part are tightened together by a U-bolt extending over the second eye part, wherein the legs of the U-bolt pass through said openings of the first eye part.

In a preferred embodiment the recess of the first eye part is facing substantially upwardly and the recess of the second eye part is facing substantially downwardly. Alternatively, the recess of the first eye part may face substantially downwardly and the recess of the second eye part may face substantially upwardly. The first eye part having the recess facing substantially upwardly or downwardly has the advantage that the workpiece can be forged in a single strike in one direction by a forging device. "Facing substantially upwardly" and "facing substantially downwardly" in this context may be defined as: the axial centre line of the curved surface of the recess faces upwardly or faces downwardly.

In another possible embodiment the recess of the first eye part is facing substantially forwardly and the recess of the second eye part is facing substantially rearwardly. This embodiment is however more complicated to make by a forging process. "Facing substantially forwardly" and "facing substantially rearwardly" in this context may be defined as: the axial centre line of the curved surface of the recess faces forwardly or faces rearwardly.

In the above-mentioned embodiments the eye parts have an interface or a dividing surface between them that has an orientation "front to rear" or "top to bottom". It is also possible to have an inclined orientation of the dividing surface between the first and second eye parts in between the "front to rear" and the "top to bottom" orientations as described in the foregoing.

In a possible embodiment the first eye part and the second eye part each have two flanges with a mounting hole. In this embodiment the clamping force can be well distributed by tightening the eye parts together at two sides of the pivot axis defined by the pivot eye. Moreover, a pivot eye assembled from two eye parts having two flanges according to this embodiment can be made less wide and less thick than a bent eye, whereby a weight saving is achieved.

For some less heavy duty embodiments it may be possible to have only one flange with one or more mounting holes, whereby the eye parts are tightened together only on one side of the pivot axis. This may save weight.

Reinforcing ribs may be formed on an outer side of the first eye part and/or the second eye part. The reinforcing ribs make the pivot eye more rigid which facilitates to avoid fatigue in the construction, e.g. in the tightening bolts.

Preferably, the first eye part and the second eye part each have an abutment surface on both sides of the respective recesses, wherein the eye parts abut each other at the abutment surfaces. The mutual abutment on both sides has the effect that the tightening bolts are not or at least less subjected to dynamic loads and are thus less prone to fatigue.

In a possible embodiment an elongate expansion chamber is formed in the eye for receiving expanding rubber of a rubber outer lining of the bearing bush. This embodiment is in particular intended for an assembly method wherein the eye parts are clamped together around the bearing bush. The expansion chamber receives the rubber that bulges out due to the compression in the eye parts. This prevents rubber of the bearing bush to get stuck between abutment surfaces of the eye parts. Rubber between the abutment surfaces would cause dynamically loaded tightening bolts in use, which thereby become prone to fatigue fracturing. The expansion chamber gives space for the expanding rubber at the interface of the eye parts when the eye parts are tightened together, such that the rubber will not end up between the abutment surfaces which are clamped together. In a possible further embodiment the expansion chamber is an elongate expansion chamber formed by an indentation at the edge between the abutment surface and the recess of at least one of the first eye part and the second eye part. The elongate expansion chamber is preferably limited at the longitudinal ends such that the rubber cannot creep out.

The recess of the first eye part and/or the recess of the second eye part may have a semicylindrical shape.

In another embodiment the recess of the first and/or second eye part has partially the shape of a cylinder segment with an angle less than 180°, preferably in a range of 150°- 179°, and wherein the recess furthermore is defined by opposing tapering guiding surfaces which extend from the abutment surface towards the cylinder segment shaped portion aligned with a tangential direction at the end of the cylinder segment. In this embodiment the opposing tapering guiding surfaces prevent that the rubber of the bearing bush gets caught between the abutment surfaces of the eye parts when they are clamped together. The tapering guiding surfaces provide radial space for the rubber to expand when compressed. The function and working of this radial space is comparable to the expansion chamber formed as an indentation as described in the foregoing.

In a possible embodiment cooperating positioning surfaces are formed around the mounting holes in the opposing flanges. Preferably, one of the positioning surfaces has a protruding character, and the opposing positioning surface has a receiving character. The positioning surfaces may have a spherical or conical shape. Such cooperating positioning surfaces provide a well- defined positioning of the eye parts on each other. Moreover if a protruding positioning surface is received in the other positioning surface the eye parts are interlocked in the directions perpendicular to the clamping direction.

The invention also relates to a trailing arm assembly including a trailing arm as described in the above, and furthermore including a bearing bush comprising a metal bushing and a rubber outer lining, which bearing bush is arranged within the pivot eye.

The invention furthermore relates to a wheel axle suspension for a vehicle such as a truck, trailer or semi-trailer comprising a trailing arm assembly as mentioned in the foregoing, and furthermore comprising a bearing bracket attached to the vehicle chassis, an air spring arranged against the vehicle chassis and attachment means to attach an axle body of the wheel axle against the trailing arm, wherein the front end portion of the trailing arm assembly is pivotally mounted to the bearing bracket, and a rear end portion of the trailing arm is mounted to the air spring. The front end portion of the trailing arm is mounted to the bearing bracket using a pivot bolt and a corresponding nut.

The invention also relates to a trailing arm assembly for a wheel axle suspension, wherein the trailing arm has a front end portion configured to pivotally attach the trailing arm to a vehicle chassis; a rear end portion configured to attach the trailing arm to an air spring; and an attachment portion, located at a distance from the front end portion, configured to attach an axle body to the trailing arm. The front end portion of the trailing arm includes a pivot eye comprising a first eye part integrally formed with the remainder of the trailing arm and a separately formed second eye part. The first eye part and second eye part each have a recess with a, at least partial, cylindrical segment shape, wherein, in an assembled state, the first and second eye parts are arranged opposite each other such that the recesses define an eye for receiving a bearing bush, and the first eye part and the second eye part each have at least one flange with at least one mounting hole, said flanges, in the assembled state, being positioned opposite each other to be tightened together by a bolt extending through the mounting holes.

The invention also relates to a method for manufacturing a trailing arm as described in the above, wherein the trailing arm including the first eye part is formed by forging, rolling or casting from a suitable metal, preferably spring steel, and wherein the second eye part is formed separately by forging or casting from a suitable metal, preferably steel or iron.

In particular, the invention relates to a method for manufacturing a trailing arm for a wheel axle suspension, the method comprising the steps of:
- forging an integral trailing arm or a leading part of a trailing arm from spring steel, the trailing arm or leading part of the trailing arm comprising at least a first eye portion, an axle attachment portion located at a distance from the first eye portion, and a spring portion extending between the first eye portion and the axle attachment portion, wherein the first eye portion, the spring portion and the axle attachment portion are forged in one piece, and wherein the first eye part is formed having a recess with a, at least partial, cylindrical segment shape, and at least one flange,
- separately forming a second eye part from a suitable metal, wherein the second eye part has a recess with an, at least partial, cylindrical segment shape,
- assembling the first eye part and the second eye part by arranging them opposite each other such that the recesses define an eye and by tightening the first eye part and second eye part together by at least one bolt or U-bolt.

The invention furthermore relates to a method for manufacturing a trailing arm for a wheel axle suspension, the method comprising the steps of:
- rolling a spring steel workpiece to an integral trailing arm or a leading part of a trailing arm, including a spring portion and an axle attachment portion at one end of the spring portion,
- forging a first eye part at another end of the spring portion, the first eye part being formed having a recess with a, at least partial, cylindrical segment shape, and at least one flange,
- separately forming a second eye part from a suitable metal, wherein the second eye part has a recess with an, at least partial, cylindrical segment shape,
- assembling the first eye part and the second eye part by arranging them opposite each other such that the recesses define an eye and by tightening the first eye part and second eye part together by at least one bolt or U-bolt.

The invention also relates to a method for manufacturing a trailing arm for a wheel axle suspension, the method comprising the steps of:
- casting an integral trailing arm or a leading part of a trailing arm from a suitable metal, e.g. iron or steel, the trailing arm or leading part of the trailing arm comprising at least a first eye portion, an axle attachment portion located at a distance from the first eye portion, and a spring portion extending between the first eye portion and the axle attachment portion, wherein the first eye portion, the spring portion and the axle attachment portion are cast in one piece, and wherein the first eye part is formed having a recess with a, at least partial, cylindrical segment shape, and at least one flange,
- separately forming a second eye part from a suitable metal, wherein the second eye part has a recess with an, at least partial, cylindrical segment shape,
- assembling the first eye part and the second eye part by arranging them opposite each other such that the recesses define an eye and by tightening the first eye part and second eye part together by at least one bolt or U-bolt.

In one particular method a bearing bush is arranged in one of the first and second eye part, after which the bearing bush is clamped between the first and second eye parts by tightening the at least one bolt or U-bolt.

In an alternative method the first and second eye part are tightened together by the at least one bolt or U-bolt, after which the bearing bush is forced into the eye in the axial direction by a dedicated pressing device.

The invention will be further elucidated in the following detailed description with reference to the drawings, wherein:
Fig. 1 shows an isometric view of a wheel axle suspension according to the invention,
Fig. 2 shows an exploded view of the wheel axle suspension of Fig.1
Fig. 3 shows an isometric view of a trailing arm assembly attached to an axle body of the wheel axle suspension of Fig. 1,
Fig. 4 shows a cross section through the front end portion of the trailing arm assembly of Fig. 2,
Fig. 5 shows another cross section through the front end portion of the trailing arm assembly of Fig. 2,
Fig. 6 shows a cross section through the front end portion of another trailing arm assembly according to the invention,
Fig. 7 shows an isometric view of another embodiment of a trailing arm assembly according to the invention,
Fig. 8 shows another isometric view of the trailing arm assembly of Fig. 7,
Fig. 9 shows a cross section through the front end portion of the trailing arm assembly of Fig. 7,
Fig. 10 shows an isometric view of a part of another embodiment of a trailing arm assembly according to the invention,
Fig. 11 shows another isometric view of a part of the trailing arm assembly of Fig. 10,
Fig. 12 shows a cross section through the front end portion of the trailing arm assembly of Fig. 10,
Fig. 13 shows a cross section through the front end portion of yet another trailing arm assembly according to the invention,
Fig. 14 shows a cross section through the front end portion of yet another trailing arm assembly according to the invention,
Fig. 15 shows an isometric view of a front end portion of yet another embodiment of a trailing arm assembly according to the invention,
Fig. 16 shows an isometric view of a front end portion of yet another trailing arm assembly according to the invention,
Fig. 17 shows another isometric view of the front end portion of Fig. 16,
Fig. 18 shows a side elevational view of the front end portion of Fig. 16,
Fig. 19 shows a top elevational view of the front end portion of Fig. 16, and
Fig. 20 shows a cross section of the front end portion of Fig. 16.

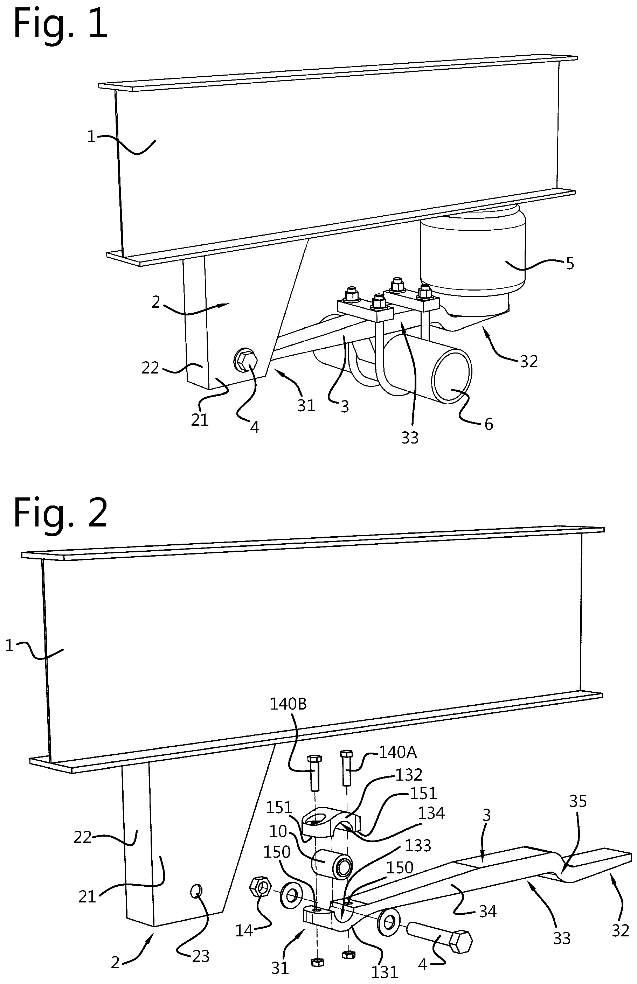

In Figs. 1 and 2 one side of an air sprung wheel axle suspension is shown schematically. The construction shown in the figure is arranged on both lateral sides of the vehicle chassis to attach a wheel axle, which extends in a lateral direction of the vehicle, to the vehicle chassis. Air sprung wheel axle suspensions are in practise used on heavy vehicles such as trailers, semi-trailers and trucks.

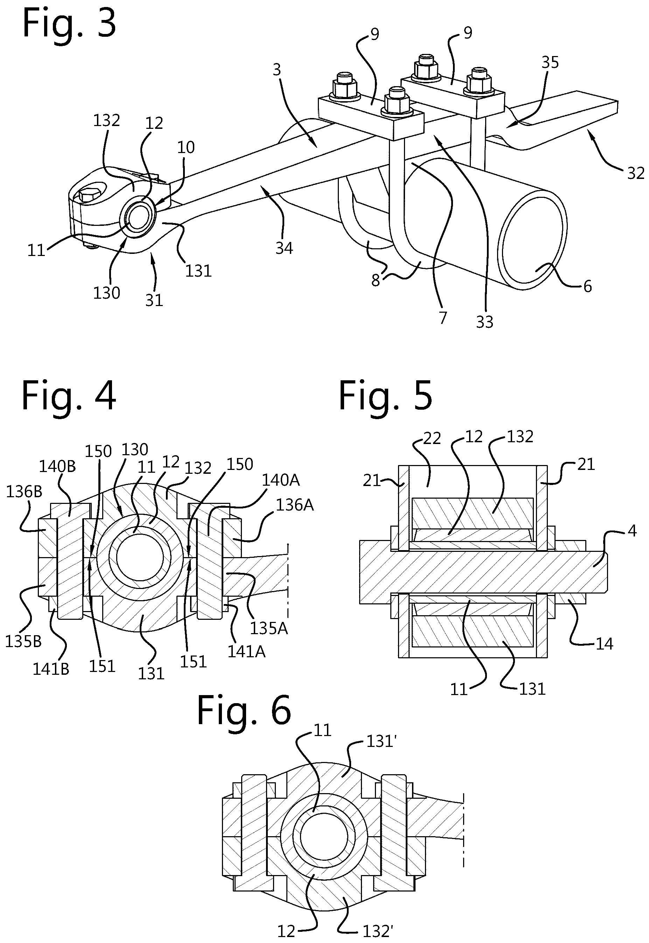

In Figs. 1 and 2 is shown in particular a longitudinal chassis beam 1, in this case formed by an I-beam. A bearing bracket 2 is attached to an underside of the chassis beam 1. The bearing bracket 2 has two lateral side plates 21. Only one side plate is visible in the Figs .1 and 2; both side plates 21 are visible in Fig. 5. The bearing bracket 2 furthermore has a front plate 22 connecting the two side plates 21. In each of the side plates 21 a mounting hole 23 is formed. The mounting holes 23 are aligned such that a pivot bolt 4 can be passed through them to mount a front end portion of a trailing arm to the bearing bracket 2.

The suspension furthermore comprises a trailing arm 3. The trailing arm 3 comprises a front end portion 31 and a rear end portion 32. The front end portion 31 is configured as an eye adapted to be positioned between the side plates 21 of the bearing bracket 2 after which the pivot bolt 4 is inserted through the mounting holes 23 and the eye of the trailing arm 3 to attach the front end portion 31 pivotally to the bearing bracket 2.

The suspension furthermore comprises an air spring 5. The rear end portion 32 of the trailing arm 3 is designed to mount an underside of the air spring 5 on. The air spring 5 has an upper side which is supporting the chassis beam 1, and may be attached thereto.

Fig. 3 shows the trailing arm 3 without being attached at the front end 31 and rear end 32 to the bearing bracket 2 and air spring 5, respectively. Between the front end portion 31 and the rear end portion 32 the trailing arm 3 has an axle attachment region 33. An axle body 6 is attached to this attachment region by means of an intermediate axle pad 7, located between the axle body 6 and, in this specific case, an underside of the attachment region 33, and by means of U-bolts 8 extending through strap plates 9 extending laterally over an upper side of the attachment region 33. It is noted here that the way in which the axle body 6 is shown to be attached to the trailing arm 3 here is only intended as an example; there are other arrangements possible, which are well-known in the art. For example the trailing arm may have a curved attachment region which is designed as an axle seat portion against which the axle body lies directly. In such an embodiment an intermediate axle pad can be omitted.

Between the front end portion 31 and the attachment region 33 the trailing arm 3 has a spring portion 34. The spring portion 34 has a thickness taper wherein the thickness decreases from the attachment region 33 towards the front end portion 31. These types of trailing arms are in practise often referred to as "spring trailing arms" or "flexible trailing arms". The thickness taper usually has a parabolic shape. Therefore these trailing arms are also referred to as "parabolic trailing arms" in the relevant art. It is noted that the scope of the invention is not limited to flexible trailing arms, and that also rigid trailing arms are considered to be within the scope. The flexible trailing arm represents merely a practically relevant example.

In the example of Figs. 1-3 an intermediate portion 35 between the attachment region 33 and the rear end portion 32 has a double curved shape or cranked shape. Thereby the mounting area for the air spring 5 is located lower than the remainder of the trailing arm 3. There are however also straight trailing arms without such a crank shape possible or with an oppositely curved shape. Again this intermediate portion is to be considered only as an example.

It is also noted that in the example of the Figs. 1-3 the portions 32, 33, 34 and 35 of trailing arm 3 are formed in one piece. There are however also trailing arms possible which have a leading part and a trailing part, which are clamped around the axle body, as is for example illustrated in Figs. 5, 7 and 8 of WO 2009/014423 A1.

The present invention is focussed merely on the front end portion 31 of the trailing arm 3.

The front end portion 31 of the trailing arm 3 includes a pivot eye 130. According to the present invention the pivot eye 130 comprises a first eye part 131 integrally formed with the remainder of the trailing arm 3 and a separately formed second eye part 132, as can be best seen in Fig. 2. The first eye part 131 and second eye part 132 each have a recess 133 and 134, respectively. The recesses 133 and 134 have, at least partially, the shape of a cylindrical segment. In an assembled state, the first and second eye parts 131 and 132 are arranged opposite each other such that the recesses 133 and 134 define an eye for receiving a bearing bush 10 as can be seen in Figs. 2 and 3.

In the embodiment shown in Figs 1-3, the surface of the recess 133 faces substantially upwardly comparable to a palm of a hand facing upwardly. Similarly, the surface of the recess 134 faces substantially downwardly. "Facing substantially upwardly" and "facing substantially downwardly" in this context may be defined as: the axial centre line of the cylindrical surface of the recess 133 and 134 faces upwardly and faces downwardly, respectively.

The bearing bush 10 comprises an inner metal bush 11 and an outer lining 12 made of rubber. Such a bearing bush 10 is sometimes called a silentblock in the relevant technical field. The rubber lining 12 engages the curved surface of the recesses 133 and 134. In Fig. 4 is shown a cross section in longitudinal direction, in which is visible how the bearing bush 10 is clamped in the recesses 133, 134 of the first and second eye parts 131, 132.

The first eye part 131 has flanges 135A and 135B in front of and rearwardly from the recess 133. The second eye part 132 has flanges 136A, 136B in front of and rearwardly from the recess 134. A through bore is formed in the flanges 135A, 135B, 136A, 136B as a mounting hole. The flanges 135A, 136A and 135B, 136B respectively are positioned opposite each other in the assembled state to be tightened together by a bolt 140A, 140B extending through the aligned mounting holes and cooperating with a nut 141A, 141B.

During assembly of the pivot eye 130 the bearing bush 10 can be arranged in the recess 133 of the first eye part 131 after which the second eye part 132 is placed over it and clamped to the first eye part 131 by the nuts 140A, 140B and nuts 141A, 141B. By tightening the nuts 141A, 141B on the bolts 140A, 140B the rubber lining 12 of the bearing bush 10 is provided with a pretension. The first eye part 131 has an abutment surface 150 on both sides of the recess 133. The second eye part 132 has an abutment surface 151 on both sides of the recess 134 as is visible in Figs. 2 and 4. The eye parts 131, 132 must have these rigid abutments, because otherwise the rubber lining 12 of the bearing bush 10 would allow too much movement between the eye parts 131, 132 and the bolts 140A, 140B would be subjected to mechanical loads which makes them prone to fatigue fracturing.

Notwithstanding the above, the trailing arm 3 according to the invention also provides the possibility to clamp the abutment surfaces 150 and 150 of the eye parts 131 and 132 together with the bolts 140A, 140B and nuts 141A, 141B and then insert the bearing bush 10 in a more conventional way, as it is also done with bent eyes of trailing arms.

Fig. 5 shows a cross section in transverse direction through the pivot eye in a mounted state in the bearing bracket 2. The pivot eye with the bearing bush 10 is positioned between the side plates 21 of the bearing bracket 2. The pivot bolt 4 extends through the mounting holes 23 in the side plates 21 and through the metal bush 11 of the bearing bush 10. By tightening a corresponding nut 14 on the pivot bolt 4 the side plates 21 are clamped against the ends of the metal bush 11, which is thus tightly held between the plates 21, as is visible in Fig. 5. When the trailing arm 3 is pivoting the metal bush 11 remains stationary with respect to the side plates, while the rubber lining 12 elastically deforms in the circumferential direction, which counteracts the pivoting movement.

In Fig. 6 is shown a similar embodiment of the eye as shown in Figs 1-4, but wherein the first eye part 131' is arranged on top and the second eye part 132' is arranged at an underside. The remainder of the trailing arm may be similar or different as shown in the previous figures.

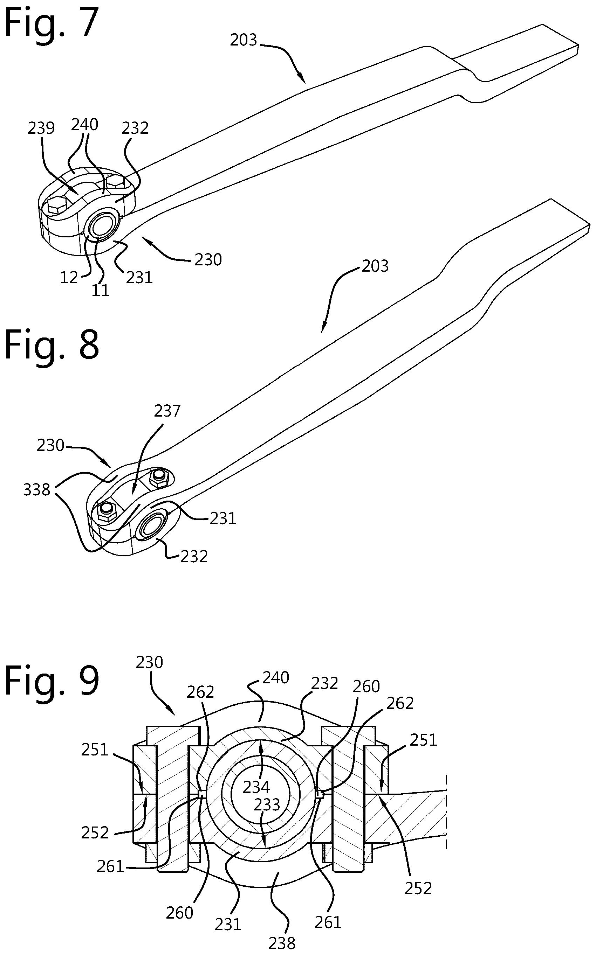

In Figs. 7-9 a different embodiment of a trailing arm according to the invention is shown. The trailing arm indicated with reference numeral 203 is only different from the earlier shown trailing arm 3 at the front end portion.

The trailing arm 203 also has a two-piece pivot eye 230 having a first eye part 231 and a second eye part 232. A difference with the previous embodiment is that the first eye part 231 and the second eye part 232 have a region 237, 239 having a smaller thickness at the outer side. The regions 237, 239 extend in the longitudinal direction. The lateral sides effectively comprise a reinforcing rib 238, 240. This configuration makes the pivot eye 230 more lightweight with respect to the pivot eye of the previous trailing arm 3.

The eye parts 231 and 232 abut each other at abutment surfaces 251 and 252, located on both sides of the respective recesses 233 and 234. Another difference between this embodiment and the embodiment of Fig. 4 is that an elongate expansion chamber 260 is formed in the eye for receiving expanding rubber of the rubber outer lining 12 of the bearing bush 10. The expansion chamber 260 is visible in Fig. 9 and is formed by an indentation 261, 262 at the edge between the abutment surface 251, 252 and the recess 233, 234 of both the first eye part 231 and the second eye part 232, respectively. This embodiment thus has two expansion chambers 260, one at each side of the recesses 233, 234. This embodiment is in particular suitable for clamping the eye parts 231 and 232 together around the bearing bush 10. The expansion chambers 260 receive the rubber that bulges out due to the compression of the rubber lining 12 in the eye parts 231 and 232. This prevents rubber of the bearing bush 10 to get stuck between the abutment surfaces 251 and 252 of the eye parts 231, 232. Rubber ending up between the abutment surfaces 251 and 252 would cause a less rigid connection between the eye parts 231, 232, which may result in use in dynamically loaded tightening bolts. Dynamically loaded tightening bolts have an increased risk of failure due to fatigue fracturing. The expansion chambers 260 give space for the expanding rubber at the interface of the eye parts 231, 232 when the eye parts are tightened together, such that the expanding rubber will not end up between the abutments surfaces 251 and 252 which are clamped together. The elongate expansion chamber 260 may be limited at the longitudinal ends such that the rubber cannot creep out at the axial ends.

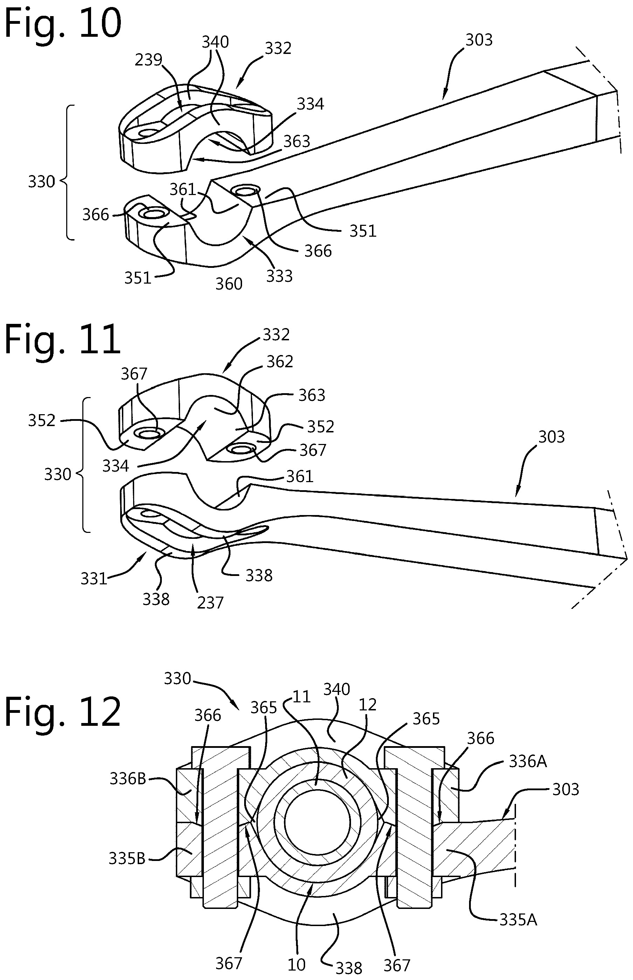

In Figs. 10-12 another embodiment of a trailing arm is shown. This trailing arm is indicated with reference numeral 303.

The trailing arm 303 also has a two-piece pivot eye 330 having a first eye part 331 and a second eye part 332. The outside of the eye parts 331, 332 is similar to the eye parts 231, 232 of the trailing arm 203: The first eye part 331 and the second eye part 332 have a region 337 and 339, respectively, extending in the longitudinal direction at the outer side, which region 237 and 239 has a smaller thickness than at the lateral sides. The lateral sides effectively comprise a reinforcing rib 338, 340. This configuration makes the pivot eye 330 more lightweight with respect to the pivot eye of the trailing arm 3 of Figs. 1-5.

The eye parts 331 and 332 abut each other at abutment surfaces 351 and 352, located on both sides of the respective recesses 333, 334 (see Figs. 10 and 11). The recess 333 of the first eye part 331 has a surface portion 360 with the shape of a cylinder segment with an angle less than 180°, preferably in a range of 150°- 179°. The recess 333 is furthermore defined by opposing tapering guiding surfaces 361 which extend from the abutment surface 351 towards the cylinder segment shaped surface portion 360 aligned with a tangential direction at the end of the cylinder segment. The recess 334 of the second eye part 332 has a surface portion 362 with the shape of a cylinder segment with an angle less than 180°, preferably in a range of 150°- 179°. The recess 334 is furthermore defined by opposing tapering guiding surfaces 363 which extend from the abutment surface 352 towards the cylinder segment shaped surface portion 362 aligned with a tangential direction at the end of the cylinder segment. When the eye parts 331 and 332 are clamped together the tapering guiding surfaces 361 and 363 define an expansion space 365 as is visible in Fig. 12. The expansion space 365, which has a comparable function as the expansion chamber 260 in Fig. 9, provides space for the expanding rubber of the rubber lining 12 of the bearing bushing 10 at the interface of the eye parts 331, 332 when the eye parts are tightened together around the bearing bushing 10. Thereby the expanding rubber will not end up between the abutments surfaces 351 and 352 which are clamped together.

Cooperating positioning surfaces 366 and 367 are formed around the mounting holes in the opposing flanges 335A, 336A and 335B, 336B of the first and second eye parts 331, 332. The positioning surfaces 367 on the second eye part protrude with respect to the abutment surfaces 352. The opposing positioning surfaces 366 on the first eye part 331 are recessed with respect to the abutment surfaces 351. The positioning surfaces 366 are adapted to receive the positioning surfaces 367. Preferably the positioning surfaces 366 and 367 have a conical shape such that their cooperation provides a good alignment of the mounting holes in the flanges 335A, 336A and 335B, 336B and a good mutual positioning of the recesses 333, 334. However, also another tapering surface may be used, for example a spherical surface.

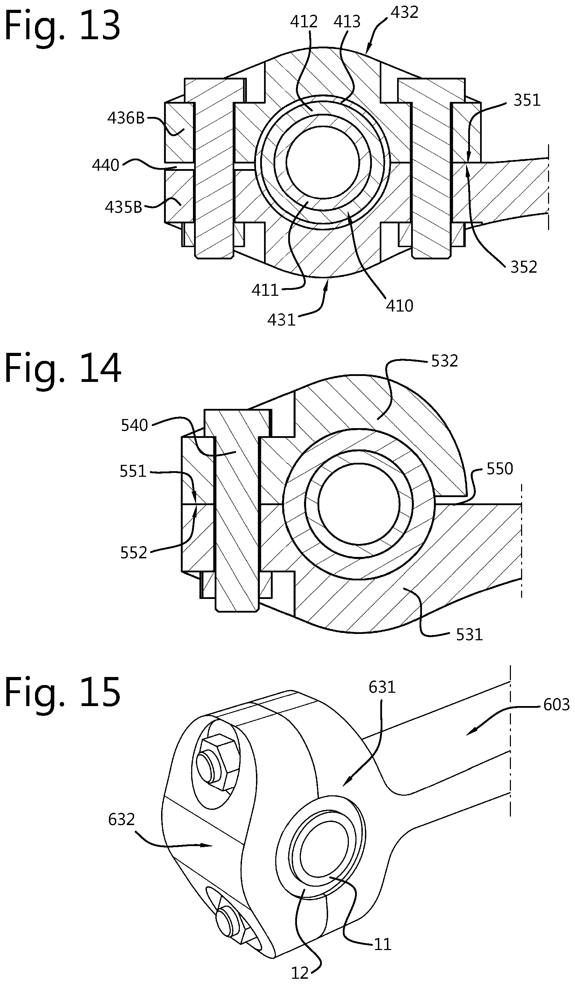

In Fig. 13 is shown a front end portion of a trailing arm assembly according to the invention, wherein the bearing bush 410 has a metal inner bush 411, a rubber lining 412 on the outside of the metal bush 411, and a metal outer casing 413 on the outside of the rubber lining 412.

The first eye part 431 and second eye part 432 in this embodiment only abut at abutment surfaces rearward of the eye, thus rearward of the bearing bush 410. In front of the eye the opposing flanges 435B and 436B of the respective eye parts 431 and 432 are spaced apart thus leaving a gap 440 between the front end flanges 435B and 436B. The gap 440 is necessary to be able to compensate for manufacturing tolerances. It is noted that when the metal outer casing 413 would be omitted, the gap 440 would not be necessary because the rubber lining 412 would then be able compensate for tolerances.

Fig. 14 shows an embodiment of a front end portion of a trailing arm assembly according to the invention, wherein a first eye part 531 and a second eye part 532 are clamped together only on one side of the eye, in this case on the front side. Only one tightening bolt 540 is shown in this example to clamp the abutment surfaces 551 and 552 together at that side, but it is conceivable to use two or more bolts on a single side of the eye. On the other side the flanges are spaced apart and leave a gap 550.

Fig. 15 shows a front end portion of a trailing arm assembly according to the invention
wherein the interface between the eye parts is not oriented from front to back, as in all the previous embodiments, but is oriented in height direction. The trailing arm 603 has a first eye portion 631 integrally formed with the remainder of the arm 603. A separate eye portion 632 is positioned in front of the first eye portion 631. The recess of the first eye portion is thus facing substantially towards the front. The recess of the second eye portion is facing substantially towards the rear. For the rest the eye parts have similar features as the eye parts shown in Figs. 1-5.

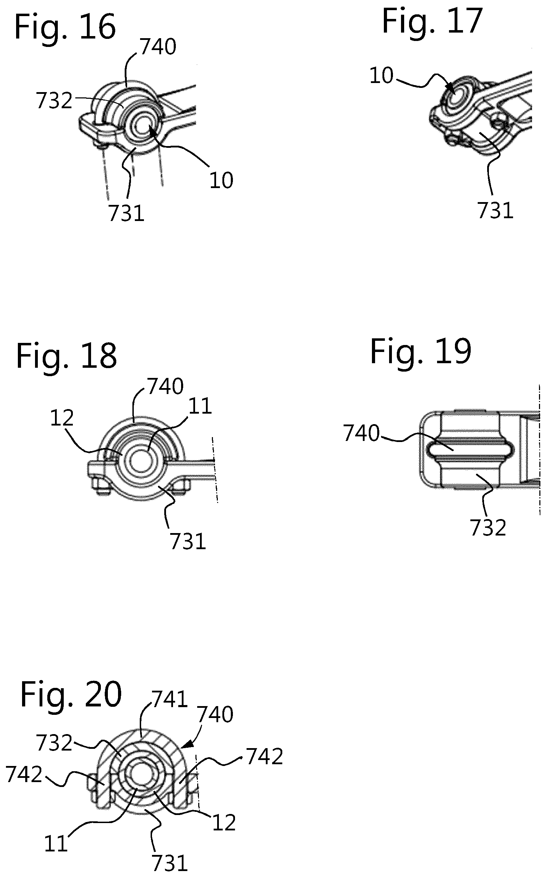

In another embodiment, which is shown in Figs. 16-20 the front end portion of the trailing arm comprises an eye part 731, a so called first eye part, which can form a pivot eye with an opposite separate eye part 732 clamped on the first eye part 731 of the trailing arm by means of a U-bolt 740. A bearing bush 10, i.e. a silentblock, having an inner metal bush 11 and an outer rubber layer 12 is clamped on the eye part 731 of the trailing arm by means of the U-bolt 740 and the separate eye part 732. The separate eye part 732 in this embodiment does not have flanges, but may have a groove on the outer side in the circumferential direction to receive the bend portion 741 of the U-bolt 740. The legs 742 of the U-bolt extend through bores in the flanges of the eye part 731.

Although advantages of the present invention become evident the most when the trailing arm with the first eye part is made by forging in one step, the invention also encompasses trailing arms made with another forming process or forming processes. It is for example conceivable to form the trailing arm by a rolling process, after which the front end portion is formed by a forging process. Another example comprises a trailing arm made by a casting process, wherein the trailing arm, including the first eye part, is made in one step by casting from a suitable metal.

## Claims

1. Trailing arm (3, 203, 303) for a trailing arm assembly, the trailing arm (3, 203, 303) having a front end portion (31) including a first eye part (131, 231, 331, 431, 531, 631, 731) integrally formed with the remainder of the trailing arm (3) by a metal forming process, an attachment portion (33), located at a distance from the front end portion (31), configured to attach an axle body to the trailing arm (3), a rear end portion configured to attach the trailing arm to an air spring, and a spring portion (34) extending between the front end portion (31) and the attachment portion (33),
**characterised in that** the first eye part (131, 231, 331, 431, 531, 631, 731) has a recess (133, 333) with a, at least partial, cylindrical segment shape, such that, in the trailing arm assembly the recess (133, 333) can be positioned opposite a second separately formed eye part (132, 232, 332, 432, 532, 632) having a recess (134, 234, 334) with a, at least partial cylindrical segment shape, to define a pivot eye to pivotally attach the trailing arm (3, 103, 203) to a vehicle chassis,
and wherein the first eye part (131, 231, 331, 431, 531, 631, 731) has at least one flange (135A, 135B, 335A, 335B, 435B) with at least one mounting hole (150) for a bolt, for tightening the first eye part (131, 231, 331, 431, 531, 631, 731) and second eye part together, to extend through).

2. Trailing arm according to claim 1, wherein the trailing arm (3, 203, 303) is a forged one-piece trailing arm made of spring steel.

3. Trailing arm according to claim 1, wherein the trailing arm (3, 203, 303) is a one-piece flexible trailing arm made of spring steel by a rolling process, after which the front end portion is made by a forging process.

4. Trailing arm according to any of the preceding claims, wherein the recess (133, 233, 333) of the first eye part (131, 231, 331, 431, 531, 731) is facing upwardly, i.e. the axial centre line of the curved surface of the recess (133, 333) faces upwardly.

5. Trailing arm according to any of the claims 1-3, wherein the recess of the first eye part is facing downwardly, i.e. the axial centre line of the curved surface of the recess faces downwardly.

6. Trailing arm according to any of the claims 1-5, wherein the recess (333, 334) of the first eye part (331) has partially the shape of a cylinder segment with an angle less than 180°, preferably in a range of 150°- 179°, and wherein the recess (333) furthermore is defined by opposing tapering guiding surfaces (361) which extend from an abutment surface (351) on the flanges (335A, 335B) towards the cylinder segment shaped portion aligned with a tangential direction at the end of the cylinder segment.

7. Trailing arm assembly for a wheel axle suspension, comprising:
- a flexible trailing arm (3, 203, 303) according to any one of the preceding claims;
- a second, separately formed eye part (132, 232, 332, 432, 532, 632);
wherein the second eye part (132, 232, 332, 432, 532, 632) has a recess (134, 234, 334) with a, at least partial, cylindrical segment shape, wherein, in an assembled state, the first eye part (131, 231, 331, 431, 531, 631) and second eye part (132, 232, 332, 432, 532, 632) are arranged opposite each other such that the recesses (133, 134, 233, 234, 333, 334) define a pivot eye adapted to pivotally attach the trailing arm (3) to a vehicle chassis, and
wherein the first eye part (131, 231, 331, 431, 531, 631) and the second eye part (132, 232, 332, 432, 532, 632) each have at least one flange with at least one mounting hole (150, 151), said flanges, in the assembled state, being positioned opposite each other and tightened together by a bolt (140A, 140B) extending through the mounting holes (150, 151).

8. Trailing arm assembly according to claim 7, wherein the first eye part (231) and the second eye part (232) each have an abutment surface (251, 252) on both sides of the respective recesses (233, 234), wherein the eye parts (231, 232) abut each other at the abutment surfaces (251, 252).

9. Trailing arm assembly according to claim 8, wherein an expansion chamber (260) is formed in the eye for receiving expanding rubber of a rubber outer lining (12) of the bearing bush (10), wherein, preferably the expansion chamber (260) is an elongate expansion chamber formed by an indentation (261, 262) at the edge between the abutment surface (251, 252) and the recess (233, 234) of at least one of the first eye part (231) and the second eye part (232).

10. Trailing arm assembly according to any of the claims 7-9, wherein cooperating positioning surfaces (366, 367) are formed around the mounting holes in the opposing flanges, wherein, preferably, one of the positioning surfaces (367) has a protruding character, and the opposing positioning surface (366) has a receiving character, and wherein, preferably, the positioning surfaces (366, 367) have a spherical or conical shape.

11. Trailing arm assembly for a wheel axle suspension, comprising:
- a flexible trailing arm (3) having a front end portion (31), an attachment portion (33), located at a distance from the front end portion (31), configured to attach an axle body (6) to the trailing arm (3), and a spring portion (34) extending between the front end portion (31) and the attachment portion (33), **characterized in that** the front end portion (31) comprises a first eye part (731) integrally formed with the remainder of the trailing arm (3) by a metal forming process, wherein the first eye part has flanges with bores;
and **in that** the trailing arm assembly furthermore comprises:
- a second, separately formed eye part (732);
- a bearing bush (10) having an inner metal bush (11) and an outer rubber layer (12);
- a U-bolt (740) having legs (742) and a bend portion (741);
wherein the bearing bush (10) is clamped on the first eye part (731) by means of the second eye part (732) and the U-bolt (740).

12. Trailing arm assembly according to claim 11, wherein a groove is formed on an outer side of the second eye part (732), adapted to receive the bend portion (741) of the U-bolt (740).

13. Wheel axle suspension for a vehicle such as a truck, trailer or semi-trailer comprising a trailing arm assembly according to any of the claims 7-12, and furthermore comprising a bearing bracket (2) attached to the vehicle chassis (1), an air spring (5) arranged against the vehicle chassis (1) and attachment means to attach an axle body (6) of the wheel axle against the trailing arm (3), wherein the front end portion (31) of the trailing arm assembly is pivotally mounted to the bearing bracket (2) by a pivot bolt (4) and a corresponding nut (14), and wherein a rear end portion (32) of the trailing arm (3) is mounted to the air spring (5).

14. Method for manufacturing a trailing arm according to any of the claims 1-6, wherein the trailing arm (3, 203, 303) is formed in one step by a forging process.

15. Method for manufacturing a trailing arm according to any of the claims 1-6, wherein the trailing arm (3, 203, 303) is made by a rolling process after which the front end portion (31) is formed by a forging process.

## Patentansprüche

1. Längslenker (3, 203, 303) für eine Längslenkerbaugruppe, wobei der Längslenker (3, 203, 303) einen vorderen Endabschnitt (31) mit einem ersten Ösenteil (131, 231, 331, 431, 531, 631, 731), der mit dem verbleibenden Längslenker (3) durch einen Metallformungsvorgang integral ausgebildet ist, einen Befestigungsabschnitt (33), der vom vorderen Endabschnitt (31) entfernt angeordnet und dazu ausgelegt ist, einen Achsenkörper am Längslenker (3) zu befestigen, einen hinteren Endabschnitt, der dazu ausgelegt ist, den Längslenker mit einer Luftfeder zu verbinden, und einen Federabschnitt (34), der sich zwischen dem vorderen Endabschnitt (31) und dem Befestigungsabschnitt (33) erstreckt, aufweist,
**dadurch gekennzeichnet, dass** der erste Ösenteil (131, 231, 331, 431, 531, 631, 731) eine Aussparung (133, 333) mit einer zumindest teilweise zylindrischen Segmentform aufweist, sodass in der Längslenkerbaugruppe die Aussparung (133, 333) einem zweiten, separat ausgebildeten Ösenteil (132, 232, 332, 432, 532, 632) entgegengesetzt positioniert sein kann, der eine Aussparung (134, 234, 334) mit einer zumindest teilweise zylindrischen Segmentform aufweist, um eine Schwenköse zu definieren, um den Längslenker (3, 103, 203) schwenkbar an einem Fahrzeugchassis zu befestigen,
und wobei der erste Ösenteil (131, 231, 331, 431, 531, 631, 731) mindestens einen Flansch (135A, 135B, 335A, 335B, 435B) mit mindestens einer Montagebohrung (150) aufweist, durch welche sich ein Bolzen erstrecken kann, um den ersten Ösenteil (131, 231, 331, 431, 531, 631, 731) und den zweiten Ösenteil zusammenzuziehen.

2. Längslenker nach Anspruch 1, wobei der Längslenker (3, 203, 303) ein geschmiedeter einteiliger Längslenker aus Federstahl ist.

3. Längslenker nach Anspruch 1, wobei der Längslenker (3, 203, 303) ein einteiliger flexibler Längslenker aus Federstahl ist, der durch einen Walzvorgang gefertigt wurde, nach dem der vordere Endabschnitt durch einen Schmiedevorgang gefertigt wird.

4. Längslenker nach einem der vorstehenden Ansprüche, wobei die Aussparung (133, 233, 333) des ersten Ösenteils (131, 231, 331, 431, 531, 731) aufwärts gewandt ist, d. h. die axiale Mittellinie der gekrümmten Fläche der Aussparung (133, 333) ist aufwärts gewandt.

5. Längslenker nach einem der Ansprüche 1-3, wobei die Aussparung des ersten Ösenteils abwärts gewandt ist, d. h. die axiale Mittellinie der gekrümmten Fläche der Aussparung ist abwärts gewandt.

6. Längslenker nach einem der Ansprüche 1-5, wobei die Aussparung (333, 334) des ersten Ösenteils (331) zum Teil die Form eines Zylindersegments mit einem Winkel von weniger als 180°, vorzugsweise im Bereich von 150°-179°, aufweist, und wobei die Aussparung (333) ferner durch entgegengesetzte verjüngte Führungsflächen (361) definiert ist, die sich von einer Anschlagfläche (351) der Flansche (335A, 335B) zum zylindersegmentförmigen Abschnitt erstrecken, der mit einer Tangensrichtung am Ende des Zylindersegments ausgerichtet ist.

7. Längslenkerbaugruppe für eine Radachsenaufhängung, umfassend:
- einen flexiblen Längslenker (3, 203, 303) nach einem der vorstehenden Ansprüche;
- einen zweiten, separat ausgebildeten Ösenteil (132, 232, 332, 432, 532, 632);
wobei der zweite Ösenteil (132, 232, 332, 432, 532, 632) eine Aussparung (134, 234, 334) mit einer zumindest teilweise zylindrischen Segmentform aufweist, wobei im montierten Zustand der erste Ösenteil (131, 231, 331, 431, 531, 631) und der zweite Ösenteil (132, 232, 332, 432, 532, 632) einander entgegengesetzt angeordnet sind, sodass die Aussparungen (133, 134, 233, 234, 333, 334) eine Schwenköse definieren, die dazu eingerichtet ist, den Längslenker (3) schwenkbar an einem Fahrzeugchassis zu befestigen, und
wobei der erste Ösenteil (131, 231, 331, 431, 531, 631) und der zweite Ösenteil (132, 232, 332, 432, 532, 632) jeweils mindestens einen Flansch mit mindestens einer Montagebohrung (150, 151) aufweisen, wobei die Flansche im montierten Zustand einander entgegengesetzt positioniert sind und von einem Bolzen (140A, 140B) zusammengezogen werden, der sich durch die Montagebohrungen (150, 151) erstreckt.

8. Längslenkerbaugruppe nach Anspruch 7, wobei der erste Ösenteil (231) und der zweite Ösenteil (232) jeweils eine Anschlagfläche (251, 252) auf beiden Seiten der jeweiligen Aussparungen (233, 234) aufweisen, wobei die Ösenteile (231, 232) an den Anschlagflächen (251, 252) aneinander anschlagen.

9. Längslenkerbaugruppe nach Anspruch 8, wobei eine Ausdehnungskammer (260) in der Öse ausgebildet ist, um sich ausdehnenden Kautschuk einer Kautschukaußenverkleidung (12) der Lagerbuchse (10) aufzunehmen, wobei die Ausdehnungskammer (260) vorzugsweise eine längliche Ausdehnungskammer ist, die durch eine Vertiefung (261, 262) an der Kante zwischen der Anschlagfläche (251, 252) und der Aussparung (233, 234) des ersten Ösenteils (231) und/oder des zweiten Ösenteils (232) ausgebildet ist.

10. Längslenkerbaugruppe nach einem der Ansprüche 7-9, wobei zusammenwirkende Positionierungsflächen (366, 367) um die Montagebohrungen in den entgegengesetzten Flanschen ausgebildet sind, wobei vorzugsweise eine der Positionierungsflächen (367) eine vorstehende Beschaffenheit aufweist und die entgegengesetzte Positionierungsfläche (366) eine aufnehmende Beschaffenheit aufweist und wobei die Positionierungsflächen (366, 367) vorzugsweise kugel- oder kegelförmig sind.

11. Längslenkerbaugruppe für eine Radachsenaufhängung, umfassend:
- einen flexiblen Längslenker (3) mit einem vorderen Endabschnitt (31), einem Befestigungsabschnitt (33), der vom vorderen Endabschnitt (31) entfernt angeordnet und dazu ausgelegt ist, einen Achsenkörper (6) am Längslenker (3) zu befestigen, und einem Federabschnitt (34), der sich zwischen dem vorderen Endabschnitt (31) und dem Befestigungsabschnitt (33) erstreckt, **dadurch gekennzeichnet, dass** der vordere Endabschnitt (31) einen ersten Ösenteil (731) umfasst, der mit dem verbleibenden Längslenker (3) durch einen Metallformungsvorgang integral ausgebildet ist, wobei der erste Ösenteil Flansche mit Bohrungen aufweist;
und dass die Längslenkerbaugruppe ferner Folgendes umfasst:
- einen zweiten, separat ausgebildeten Ösenteil (732);
- eine Lagerbuchse (10) mit einer inneren Metallbuchse (11) und einer äußeren Kautschukschicht (12);
- einen U-Bolzen (740) mit Schenkeln (742) und einem Bogenabschnitt (741);
wobei die Lagerbuchse (10) mittels des zweiten Ösenteils (732) und des U-Bolzens (740) am ersten Ösenteil (731) eingespannt ist.

12. Längslenkerbaugruppe nach Anspruch 11, wobei auf einer Außenseite des zweiten Ösenteils (732) eine Nut ausgebildet ist, die dazu eingerichtet ist, den Bogenabschnitt (741) des U-Bolzens (740) aufzunehmen.

13. Radachsenaufhängung für ein Fahrzeug, zum Beispiel einen Lastkraftwagen, einen Anhänger oder einen Sattelauflieger, umfassend eine Längslenkerbaugruppe nach einem der Ansprüche 7-12 und ferner umfassend einen Lagerbügel (2), der an dem Fahrzeugchassis (1) befestigt ist, eine Luftfeder (5), die an dem Fahrzeugchassis (1) angeordnet ist, und eine Befestigungseinrichtung zum Befestigen eines Achsenkörpers (6) an der Radachse gegen den Längslenker (3), wobei der vordere Endabschnitt (31) der Längslenkerbaugruppe über einen Schwenkbolzen (4) und eine zugehörige Mutter (14) an dem Lagerbügel (2) schwenkbar montiert ist und wobei ein hinterer Endabschnitt (32) des Längslenkers (3) an der Luftfeder (5) montiert ist.

14. Verfahren zur Herstellung eines Längslenkers nach einem der Ansprüche 1-6, wobei der Längslenker (3, 203, 303) durch einen Schmiedevorgang in einem Schritt ausgebildet wird.

15. Verfahren zur Herstellung eines Längslenkers nach einem der Ansprüche 1-6, wobei der Längslenker (3, 203, 303) durch einen Walzvorgang gefertigt wird, nach dem der vordere Endabschnitt (31) durch einen Schmiedevorgang gefertigt wird.

## Revendications

1. Bras longitudinal (3, 203, 303) pour un ensemble à bras longitudinal, le bras longitudinal (3, 203, 303) ayant une portion d'extrémité avant (31) incluant une première partie d'œillet (131, 231, 331, 431, 531, 631, 731) formée de façon monobloc avec le reste du bras longitudinal (3) par un processus de formage de métal, une portion de fixation (33), située à une distance de la portion d'extrémité avant (31), configurée pour fixer un corps d'essieu au bras longitudinal (3), une portion d'extrémité arrière configurée pour fixer le bras longitudinal à un ressort pneumatique, et une portion de ressort (34) s'étendant entre la portion d'extrémité avant (31) et la portion de fixation (33),
**caractérisé en ce que** la première partie d'œillet (131, 231, 331, 431, 531, 631, 731) a un évidement (133, 333) avec une forme de segment cylindrique, au moins partielle, de manière telle que, dans l'ensemble à bras longitudinal, l'évidement (133, 333) peut être positionné en face d'une seconde partie d'œillet formée séparément (132, 232, 332, 432, 532, 632) ayant un évidement (134, 234, 334) avec une forme de segment cylindrique, au moins partielle, pour définir un œillet de pivotement pour fixer de façon pivotante le bras longitudinal (3, 103, 203) à un châssis de véhicule,
et dans lequel la première partie d'œillet (131, 231, 331, 431, 531, 631, 731) a au moins une aile (135A, 135B, 335A, 335B, 435B) avec au moins un trou de montage (150) pour un boulon, pour resserrer la première partie d'œillet (131, 231, 331, 431, 531, 631, 731) et la second partie d'œillet ensemble, pour s'étendre à travers.

2. Bras longitudinal selon la revendication 1, dans lequel le bras longitudinal (3, 203, 303) est un bras longitudinal monopièce forgé fait d'acier à ressort.

3. Bras longitudinal selon la revendication 1, dans lequel le bras longitudinal (3, 203, 303) est un bras longitudinal monopièce flexible fait d'acier à ressort par un processus de laminage, après quoi la portion d'extrémité avant est faite par un processus de forgeage.

4. Bras longitudinal selon de quelconques des revendications précédentes, dans lequel l'évidement (133, 233, 333) de la première partie d'œillet (131, 231, 331, 431, 531, 731) fait face vers le haut, à savoir la ligne centrale axiale de la surface courbée de l'évidement (133, 333) fait face vers le haut.

5. Bras longitudinal selon quelconques des revendications 1 à 3, dans lequel l'évidement de la première partie d'œillet fait face à vers le bas, à savoir la ligne centrale axiale de la surface courbée de l'évidement fait face vers le bas.

6. Bras longitudinal selon quelconques des revendications 1 à 5, dans lequel l'évidement (333, 334) de la première partie d'œillet (331) a partiellement la forme d'un segment cylindre avec un angle inférieur à 180°, de préférence dans une plage de 150° à 179°, et dans lequel l'évidement (333) est en outre défini par des surfaces de guidage inclinées opposées (361) qui s'étendent depuis une surface de butée (351) sur les ailes (335A, 335B) vers la portion en forme de segment cylindre alignée avec une direction tangentielle à l'extrémité du segment cylindre.

7. Ensemble à bras longitudinal pour une suspension d'essieu de roue, comprenant :
- un bras longitudinal flexible (3, 203, 303) selon l'une quelconque de revendications précédentes ;
- une seconde partie d'œillet formée séparément (132, 232, 332, 432, 532, 632) ;
dans lequel la seconde partie d'œillet (132, 232, 332, 432, 532, 632) a un évidement (134, 234, 334) avec une forme de segment cylindrique, au moins partielle, dans lequel, dans un état assemblé, la première partie d'œillet (131, 231, 331, 431, 531, 631) et la seconde partie d'œillet (132, 232, 332, 432, 532, 632) sont agencées l'une en face de l'autre de manière telle que les évidements (133, 134, 233, 234, 333, 334) définissent un œillet de pivotement adapté pour fixer de façon pivotante le bras longitudinal (3) à un châssis de véhicule, et
dans lequel la première partie d'œillet (131, 231, 331, 431, 531, 631) et la seconde partie d'œillet (132, 232, 332, 432, 532, 632) ont chacune au moins une aile avec au moins un trou de montage (150, 151), lesdites ailes, dans l'état assemblé, étant positionnées l'une en face de l'autre et resserrées par un boulon (140A, 140B) s'étendant à travers les trous de montage (150, 151).

8. Ensemble à bras longitudinal selon la revendication 7, dans lequel la première partie d'œillet (231) et la seconde partie d'œillet (232) ont chacune une surface de butée (251, 252) sur les deux côtés des évidements respectifs (233, 234), dans lequel les parties d'œillet (231, 232) viennent en butée l'une contre l'autre au niveaux des surfaces de butée (251, 252).

9. Ensemble à bras longitudinal selon la revendication 8, dans lequel une chambre de dilatation (260) est formée dans l'œillet pour recevoir du caoutchouc se dilatant d'un revêtement extérieur en caoutchouc (12) du coussinet de palier (10), dans lequel, de préférence la chambre de dilatation (260) est une chambre de dilatation oblongue formée par une indentation (261, 262) au niveau du bord entre la surface de butée (251, 252) et l'évidement (233, 234) d'au moins une de la première partie d'œillet (231) et de la seconde partie d'œillet (232).

10. Ensemble à bras longitudinal selon quelconques des revendications 7 à 9, dans lequel des surfaces de positionnement coopérantes (366, 367) sont formées autour des trous de montage dans les ailes opposées, dans lequel, de préférence, une des surfaces de positionnement (367) a un caractère de saillie, et la surface de positionnement opposée (366) a un caractère de réception, et dans lequel, de préférence, les surfaces de positionnement (366, 367) ont une forme sphérique ou conique.

11. Ensemble à bras longitudinal pour une suspension d'essieu de roue, comprenant :
- un bras longitudinal flexible (3) ayant une portion d'extrémité avant (31), une portion de fixation (33), située à une distance de la portion d'extrémité avant (31), configurée pour fixer un corps d'essieu (6) au bras longitudinal (3), et une portion de ressort (34) s'étendant entre la portion d'extrémité avant (31) et la portion de fixation (33), **caractérisé en ce que** la portion d'extrémité avant (31) comprend une première partie d'œillet (731) formée de façon monobloc avec le reste du bras longitudinal (3) par un processus de formage de métal, dans lequel la première partie d'œillet a des ailes avec des alésages ;
et **en ce que** l'ensemble à bras longitudinal comprend en outre :
- une seconde partie d'œillet formée séparément (732) ;
- un coussinet de palier (10) ayant un coussinet métallique intérieur (11) et une couche de caoutchouc extérieure (12) ;
- un boulon en U (740) ayant des pattes (742) et une portion cintrée (741) ;
dans lequel le coussinet de palier (10) est serré sur la première partie d'œillet (731) au moyen de la seconde partie d'œillet (732) et du boulon en U (740).

12. Ensemble à bras longitudinal selon la revendication 11, dans lequel une rainure est formée sur un côté extérieur de la seconde partie d'œillet (732), adaptée pour recevoir la portion cintrée (741) du boulon en U (740).

13. Suspension d'essieu de roue pour un véhicule tel qu'un camion, une remorque, ou un semi-remorque comprenant un ensemble à bras longitudinal selon quelconques des revendications 7 à 12, et comprenant en outre un support de palier (2) fixé au châssis de véhicule (1), un ressort pneumatique (5) agencé contre le châssis de véhicule (1) et des moyens de fixation pour fixer un corps d'essieu (6) de l'essieu de roue contre le bras longitudinal (3), dans laquelle la portion d'extrémité avant (31) de l'ensemble à bras longitudinal est monté de façon pivotante sur le support de palier (2) par un boulon de pivotement (4) et un écrou correspondant (14), et dans laquelle une portion d'extrémité arrière (32) du bras longitudinal (3) est montée sur le ressort pneumatique (5).

14. Procédé pour fabriquer un bras longitudinal selon quelconques des revendications 1 à 6, dans lequel le bras longitudinal (3, 203, 303) est formé en une étape par un processus de forgeage.

15. Procédé pour fabriquer a bras longitudinal selon quelconques des revendications 1 à 6, dans lequel le bras longitudinal (3, 203, 303) est fait par un processus de laminage après quoi la portion d'extrémité avant (31) est formée par un processus de forgeage.
